# EUROPÄISCHE PATENTSCHRIFT

(11) **EP 3 121 058 B1**
(45) Veröffentlichungstag und Bekanntmachung des Hinweises auf die Patenterteilung: **03.10.2018**
(21) Anmeldenummer: 16450015.9
(22) Anmeldetag: 14.07.2016
(51) Int. Cl.: B60M 1/20

(54) **ANORDNUNG ZUM HALTEN DER AUS TRAGSEIL UND FAHRDRAHT BESTEHENDEN OBERLEITUNG ELEKTRISCHER SCHIENENFAHRZEUGE**
ASSEMBLY FOR HOLDING THE OVERHEAD WIRE FOR ELECTRICAL RAILWAY VEHICLES COMPRISING THE SUPPORTING CABLE AND CONTACT WIRE
SYSTEME DE MAINTIEN DE CATENAIRE COMPOSE DE CABLE DE PORTAGE ET DE FIL CONDUCTEUR DE VEHICULES ELECTRIQUES SUR RAILS

(30) Priorität: 20.07.2015 AT 4762015
(43) Veröffentlichungstag der Anmeldung: 25.01.2017
(73) Patentinhaber: Ing. Karl u. Albert Kruch GmbH & Co. KG, 1230 Wien (AT)
(72) Erfinder: Röhl, Jan, 2500 Siegenfeld (AT)
(74) Vertreter: Rippel, Andreas

(56) Entgegenhaltungen:
- EP-A1- 0 406 840
- AT-B1- 515 083
- DE-A1-102012 017 164
- DE-U1- 20 314 496
- FR-A- 449 505

## Beschreibung

Die Erfindung bezieht sich auf eine Anordnung zum Halten der aus Tragseil und Fahrdraht bestehenden Oberleitung elektrischer Schienenfahrzeuge, mit einem Fahrleitungsmast, der Führungen für einen den Mast nach oben verlängernden Träger aufweist, wobei der Träger in den Führungen verschiebbar ist und einen die Oberleitung haltenden Ausleger trägt.

Eine derartige Anordnung ist in der AT 515083 B1 beschrieben.

Die FR 449 505 A zeigt einen Ausleger, der aus verschiedenen miteinander verschraubten Teilen besteht, was dessen Herstellung erschwert.

Bei bekannten Anordnungen sind Z-Ausleger in Verwendung, welche eine Vielzahl von komplizierten Einzelteilen aufweisen. Es kam schon zu Unfällen, weil die Aufhängung des unteren Z-Rohres brach und das Rohr mit dem Pantographen kollidierte.

Die Erfindung hat es sich zum Ziel gesetzt eine Anordnung zu schaffen, die einfacher und sicherer ist als die bekannten Anordnungen.

Erreicht wird dies dadurch, dass der Ausleger aus einer zu einer offenen Schleife geformten Stange besteht, deren Enden am Träger gelagert sind.

Im Rahmen der Erfindung besteht der Träger aus glasfaserverstärktem Kunststoff (GFK). Dadurch ist die Verwendung von Isolatoren, wie sie bisher notwendig war, nicht erforderlich.

Es ist vorgesehen, dass die beiden einander gegenüberliegenden Abschnitte der Schleife durch mindestens eine Strebe miteinander verbunden sind. Dadurch wird eine Versteifung der Schleife erreicht.

Eine Strebe kann aber auch zur Lagerung der Oberleitung verwendet werden. Und zwar ist am oberen Teil einer Strebe das Tragseil und am unteren Teil der Fahrdraht gelagert.

Dabei ist zweckmäßig die Lagerung des Fahrdrahtes über ein als Seitenhalter dienendes Zugseil mit der Strebe verbunden.

Um einen Zick-Zack Verlauf der Oberleitung zu ermöglichen, ist nach einem weiteren Merkmal der Erfindung die Strebe quer verschiebbar an der Schleife gelagert.

Eine kostengünstige Ausführung einer erfindungsgemäßen Anordnung ergibt sich, wenn die Stange der Schleife und die Streben aus Aluminiumrohren bestehen.

Es ist ferner vorgesehen, dass das Tragseil an einem Arm befestigt ist, der um die Achse der Strebe schwenkbar ist. Dadurch wird eine Verspannung des Tragseils bei einer Verschwenkung des Auslegers vermieden.

Nachstehend ist die Erfindung an Hand eines in den Zeichnungen dargestellten Ausführungsbeispieles näher beschrieben, ohne auf dieses Beispiel beschränkt zu sein. Dabei zeigen:
Fig. 1 eine schaubildliche Ansicht einer erfindungsgemäßen Anordnung;
Fig. 2 eine schaubildliche Ansicht der oberen Führung des Trägers;
Fig. 3 eine Ansicht auf die obere Führung mit einem eingefügten teilweisen Schnitt;
Fig. 4 eine Seitenansicht der Anordnung nach der Erfindung;
Fig. 5 in vergrößertem Maßstab eine Ansicht auf die Halterung von Tragseil und Fahrdraht;
Fig. 6 eine Seitenansicht der Anordnung in zwei Stellungen.

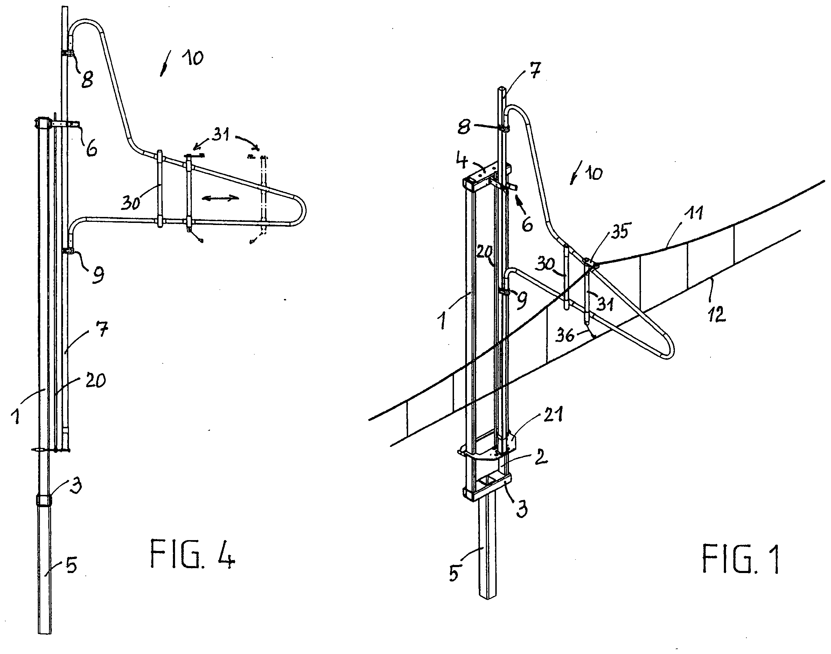

Gemäß Fig. 1 weist ein erfindungsgemäßer Fahrleitungsmast zwei Formrohre 1 und 2 auf, die unten durch ein Verbindungsstück 3 und oben durch ein Verbindungsstück 4 miteinander verbunden sind. Am Verbindungsstück 3 ist ein Rohr 5 befestigt, das der Verankerung des Fahrmastes im Boden dient.

Am oberen Führungsstück 4 ist eine Führung 6 für einen Träger 7 befestigt, der in der Führung 6 lotrecht verschiebbar ist.

An dem aus GFK bestehenden Träger 7 sind bei 8 und 9 die Enden eines Auslegers 10 gelagert, der aus einer zu einen offenen Schleife geformten Stange besteht. Der Ausleger 10 trägt die Oberleitung, das Tragseil 11 und den Fahrdraht 12.

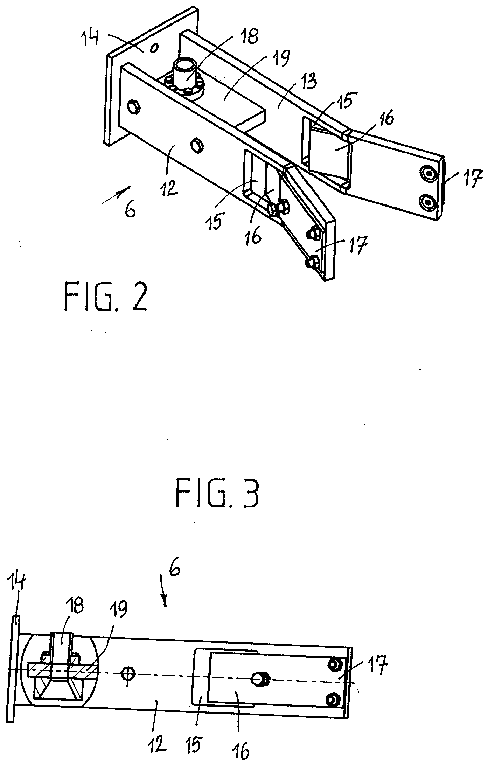

Die in den Fig. 2 und 3 gegenüber Fig. 1 vergrößert dargestellte Führung 6 weist zwei Führungsteile 12 und 13 auf, die sich maulförmig nach außen öffnen. Mittels einer Befestigungsplatte 14 ist die Führung 6 am oberen Verbindungsstück 4 befestigt. In Öffnungen 15 ragen Sperrfedern 16, die um ihre äußeren Enden 17, an denen sie an den maulförmigen Enden der Führungsteile 12 und 13 befestigt sind, schwenkbar sind.

Beim Einschieben des Trägers 7 zwischen die Führungsteile 12 und 13 bewegen sich daher die Sperrfedern 16 nach außen um nach Beendigung des Einschiebens wieder nach innen zu federn und so eine Rückbewegung des Trägers 7 verhindern.

Zwischen den beiden Führungsteilen 12 und 13 ist eine Mutter 18 auf einer Platte 19 befestigt. In die Mutter 18 ist eine parallel zum Träger 7 verlaufende Gewindespindel 20 einschraubbar, welche in einem unteren Führungsteil 21 drehbar gelagert ist. Der Führungsteil 21 ist in den als Führungen ausgebildeten Holmen 1 und 2 verschiebbar geführt.

Die beiden gegenüberliegenden Abschnitte der Schleife des Auslegers 10 sind durch Streben 30, 31 miteinander verbunden. Die Strebe 31 ist ganz verschiebbar an der Schleife gelagert. An der Strebe 31 sind das Tragseil 11 und der Fahrdraht 12 befestigt.

Durch die Verschiebbarkeit der Strebe 31 ist es möglich, die Oberleitung Zick-Zack zu führen, wodurch ein gleichmäßigerer Verschleiß erreicht wird. In Fig. 4 ist dies angedeutet.

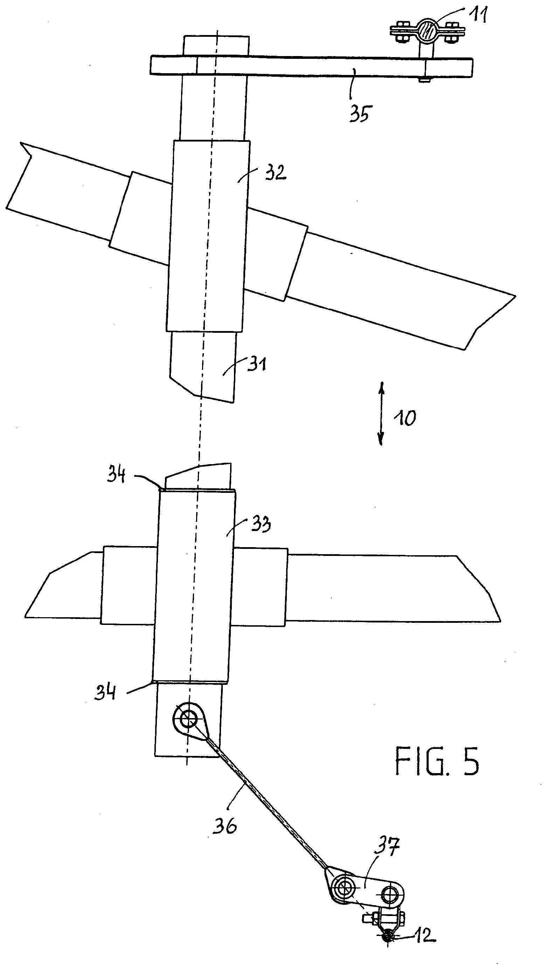

Aus Fig. 5 ist ersichtlich, dass die Strebe 31 in Rohren 32, 33 drehbar gelagert und am unteren Ende durch Seegerringe 34 gesichert ist.

Am oberen Ende der Strebe 31 ist ein Arm 35 befestigt, der das Tragseil 11 lagert. Bei einer Verschwenkung des Auslegers 10 wird das Tragseil 11 daher nicht verwürgt.

Der in einer Hängeklemme gehaltene Fahrdraht 12 ist über ein als Seitenhalter dienendes Zugseil 36 mit der Strebe 31 verbunden. Die Verbindung erfolgt dabei über einen Arm 37, mit dem die zentrale Wirkung des Zugseils 36 auf den Fahrdraht 12 eingestellt werden kann, dieser somit nicht verdrillt wird.

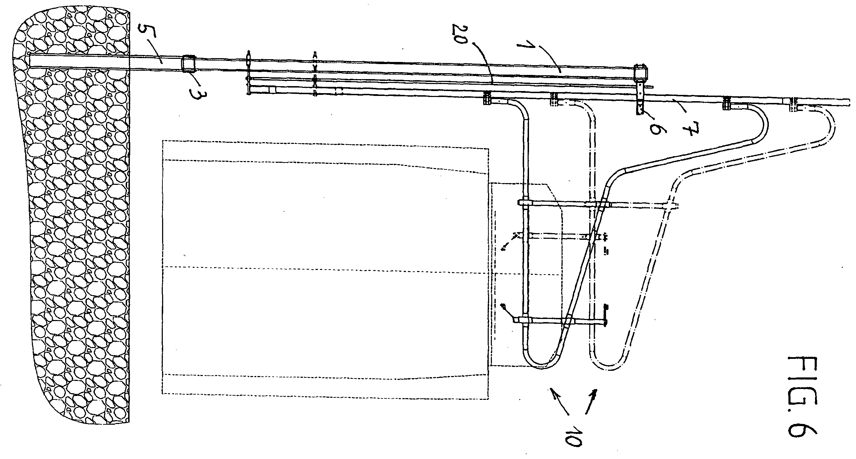

Gemäß Fig. 6 ist der Ausleger 10 in zwei Stellungen dargestellt.

Die Höhenverschwenkung erfolgt dabei durch Verschieben der Gewindespindel 20, welche sich in der Mutter 18 der Führung 6 ein- oder ausschraubt, sodass der Träger 7 lotrecht bewegt wird.

Für die erfindungsgemäße Anordnung ist auch wichtig, dass keine Massenkraft, wie von einer Seitenhalterstange, auf den Fahrdraht wirkt. Somit keine Kontaktunterbrechung bei hoher Fahrgeschwindigkeit des Zuges entsteht (Lichtbogen).

## Patentansprüche

1. Anordnung zum Halten der aus Tragseil (11) und Fahrdraht (12) bestehenden Oberleitung elektrischer Schienenfahrzeuge, mit einem Fahrleitungsmast (1, 2) der Führungen (6, 21) für einen den Mast nach oben verlängernden Träger aufweist, wobei der Träger (7) in den Führungen (6, 21) verschiebbar ist und einem die Oberleitung haltenden Ausleger (10) trägt, **dadurch gekennzeichnet, dass** der Ausleger (10) aus einer zu einer offenen Schleife (10) geformten Stange besteht, deren Enden am Träger (7) gelagert sind.

2. Anordnung nach Anspruch 1, **dadurch gekennzeichnet, dass** der Träger (7) aus glasfaserverstärktem Kunststoff (GFK) besteht.

3. Anordnung nach einem der Ansprüche 1 oder 2, **dadurch gekennzeichnet, dass** die beiden einander gegenüberliegenden Abschnitte der Schleife durch mindestens eine Strebe (30, 31) miteinander verbunden sind.

4. Anordnung nach Anspruch 3, **dadurch gekennzeichnet, dass** am oberen Teil einer Strebe (31) das Tragseil (11) und am unteren Teil der Fahrdraht (12) gelagert ist.

5. Anordnung nach Anspruch 4, **dadurch gekennzeichnet dass** die Lagerung des Fahrdrahtes (12) über ein als Seitenhalter dienendes Zugseil (36) mit der Strebe (31) verbunden ist.

6. Anordnung nach einem der Ansprüche 4 oder 5, **dadurch gekennzeichnet, dass** die Strebe (31) quer verschiebbar an der Schleife (10) gelagert ist.

7. Anordnung nach den Ansprüchen 1 bis 6, **dadurch gekennzeichnet, dass** die Stange der Schleife (10) und die Streben (30, 31) aus Aluminiumrohren bestehen.

8. Anordnung nach einem der Ansprüche 4 bis 7, **dadurch gekennzeichnet, dass** das Tragseil (11) an einem Arm (35) befestigt ist, der um die Achse der Strebe (31) schwenkbar ist.

## Claims

1. Device for holding the overhead wires, comprising a catenary wire (11) and contact wire (12), of electric railway vehicles, with an overhead wire mast (1, 2) which comprises guides (6, 21) for a support extending the mast upwards, wherein the support (7) is displaceable in the guides (6, 21) and bears an arm (10) holding the overhead wires, **characterised in that** the arm (10) comprises a rod shaped to form an open loop, the ends of which are borne on the support (7)

2. Device according to claim 1 **characterised in** the support (7) is made of glass-fibre-reinforced plastic (GFRP).

3. Device according to any one of claims 1 or 2 **characterised in that** the two opposite sections of the loop are connected to each other by at least one strut (30, 31).

4. Device according to claim 3 **characterised in that** on the upper part of one strut (31) the catenary wire (11) and on the lower part the contact wire (12) is borne.

5. Device according to claim 4 **characterised in that** the holder of catenary wire (12) is connected to the strut (31) by way of a tension wire (36) acting as lateral support.

6. Device according to any one of claims 4 or 5 **characterised in that** the strut (31) is held in a transversely displaceable manner on the loop (10).

7. Device according to claims 1 to 6 **characterised in that** the rod of the loop (10) and the struts (30, 31) are made of aluminium tubes.

8. Device according to any one of claims 4 to 7 **characterised in that** the catenary wire (11) is attached to an arm (35) which can be swivelled about the axis of the strut (31).

## Revendications

1. Agencement destiné à maintenir la ligne de contact composée d'un câble porteur (11) et d'un fil de contact (12) de véhicules ferroviaires électriques, avec un poteau support de caténaire (1,2) qui comporte des glissières (6,21) pour un support prolongeant le poteau vers le haut, le support (7) pouvant être déplacé dans les glissières (6,21) et portant une console (10) maintenant la ligne de contact, **caractérisé en ce que** la console (10) est composée d'une perche formée en une boucle ouverte (10) dont les extrémités sont logées sur le support (7).

2. Agencement selon la revendication 1, **caractérisé en ce que** le support (7) est composé de matière plastique renforcée à la fibre de verre.

3. Agencement selon l'une quelconque des revendications 1 ou 2, **caractérisé en ce que** les deux sections de la boucle opposées l'une à l'autre sont reliées entre elles par au moins une jambe de force (30,31).

4. Agencement selon la revendication 3, **caractérisé en ce que** le câble porteur (11) est logé sur la partie supérieure d'une jambe de force (31) et le fil de contact (12) est logé sur la partie inférieure.

5. Agencement selon la revendication 4, **caractérisé en ce que** le logement du fil de contact (12) est relié à la jambe de force (31) par le biais d'un câble de traction (36) servant en tant que support latéral.

6. Agencement selon l'une quelconque des revendications 4 ou 5, **caractérisé en ce que** la jambe de force (31) est logée pouvant être déplacée transversalement sur la boucle (10).

7. Agencement selon les revendications 1 à 6, **caractérisé en ce que** la perche de la boucle (10) et les jambes de force (30,31) sont en tubes d'aluminium.

8. Agencement selon l'une quelconque des revendications 4 à 7, **caractérisé en ce que** le câble porteur (11) est fixé sur un bras (35), qui peut pivoter autour de l'axe de la jambe de force (31).
